(19) Europäisches Patentamt
European Patent Office
Office européen des brevets

(11) Veröffentlichungsnummer : **0 355 007 B1**

# (12) EUROPÄISCHE PATENTSCHRIFT

(45) Veröffentlichungstag der Patentschrift : **22.07.92 Patentblatt 92/30**

(51) Int. Cl.$^5$ : **C08F 8/40,** B01J 45/00, B01J 39/12

(21) Anmeldenummer : **89114514.6**

(22) Anmeldetag : **05.08.89**

## (54) Verfahren zur Herstellung von Aminoalkylenphosphonsäuregruppen aufweisenden Ionenaustauscherharzen.

(30) Priorität : **18.08.88 DE 3828060**

(43) Veröffentlichungstag der Anmeldung : **21.02.90 Patentblatt 90/08**

(45) Bekanntmachung des Hinweises auf die Patenterteilung : **22.07.92 Patentblatt 92/30**

(84) Benannte Vertragsstaaten : **DE FR GB IT**

(56) Entgegenhaltungen :
**FR-A- 2 442 859**
**CHEMICAL ABSTRACTS, Band 93, Nr. 18, November 1980, Seite 22, Zusammenfassung Nr. 168909x, Columbus, Ohio, US; W. SZCZEPANIAKet al.: "Chelating ion exchangers with aminomethanephosphinic and iminobis(methanephosphonic) groups", & CHEM. ANAL. (WARSAW)1980, 25(1), 135-42**

(56) Entgegenhaltungen :
**CHEMICAL ABSTRACTS, Band 93, Nr. 16, 20. Oktober 1980, Seite 34, Zusammenfassung Nr. 15117q, Columbus, Ohio, US; &JP-A-80 66 904 (A.A. LOBACHER et al.) 20-05-1980**
**CHEMICAL ABSTRACTS, Band 80, Nr. 22, 3. Juni 1974, Seite 27, Zusammenfassung Nr. 121692n, Columbus, Ohio, US; & SU-A-385977 (MENDELEEV, D.I., CHEMICAL-TECHNOLOGICAL INSTITUTE, MOSCOW) 14-06-1973**

(73) Patentinhaber : **BAYER AG**
**W-5090 Leverkusen 1 Bayerwerk (DE)**

(72) Erfinder : **Klipper, Reinhold Maria, Dr.**
**Roonstrasse 9**
**W-5000 Köln 50 (DE)**
Erfinder : **Heller, Harold, Dr.**
**Hufelandstrasse 59**
**W-5000 Köln 80 (DE)**
Erfinder : **Lange, Peter Michael, Dr.**
**Walter-Flex-Strasse 9**
**W-5090 Leverkusen 1 (DE)**
Erfinder : **Werner, Friedrich, Dr.**
**Auf der Hedwigshöhe 8**
**W-5064 Rösrath (DE)**
Erfinder : **Mitschker, Alfred, Dr.**
**Am Gartenfeld 50**
**W-5068 Odenthal (DE)**

EP 0 355 007 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein verbessertes Verfahren zur Herstellung von Aminoalkylenphosphonsäuregruppen aufweisenden Ionenaustauscherharzen

Aminoalkylenphosphonsäuregruppen aufweisende Ionenaustauscherharze, Verfahren zu ihrer Herstellung und die Eigenschaft dieser Harze, Erdalkalimetallionen, insbesondere Kalzium und Magnesiumionen, selektiv aus konzentrierten Alkalisalz-Lösungen, z.B. Kochsalzsole, zu adsorbieren, sind bekannt (siehe z.B. US-PS 4 002 564, EP-A 1-0 087 934, CA 80, (1974) 833990y).

Die bislang bekannten Aminoalkylenphosphonsäuregruppen aufweisenden Ionenaustauscherharze haben jedoch den Nachteil, daß sie entweder nur eine unbefriedigende osmotische Widerstandsfähigkeit (Quellungsstabilität) oder aber eine unzureichende Kapazität für die aufzunehmenden Ionen aufweisen. Nach den bekannten Verfahren, es sind dies, 1) die Phosphonoalkylierung aminomethylierter vernetzter vinylaromatischer Harze in wäßrigem Medium mit Formaldehyd und Phosphor-III-Verbindungen, wie phosphoriger Säure, Mono- oder Dialkylphosphiten, in Gegenwart von Mineralsäuren (siehe CA 80, 83990y; US-PS 4 002 564 und EP-A 87 934) und 2) die Umsetzung chlormethylierter vernetzter vinylaromatischer Harze mit Aminoalkanphosphonsäure(ester)n (siehe CA 79, 147049n und CA 81, 26329m), werden Aminoalkylenphosphonsäuregruppen aufweisende Ionenaustauscherharze erhalten, die entweder eine unzureichende osmotische Widerstandsfähigkeit oder aber eine zu niedrige Kapazität für die aufzunehmenden Ionen aufweisen. Außerdem haben die bislang für die Phosphonomethylierung aminomethylierter Harze beschriebenen Verfahren (z.B. US-PS 4 002 564 und EP-A 87 934) den Nachteil, daß bei ihnen wegen der bei der Umsetzung verwendeten bzw. entstehenden Salzsäure hochtoxischer Chlormethylether als Nebenprodukt entsteht.

In der EP-A 87 934 wird zur Verbesserung der osmotischen Widerstandsfähigkeit von Aminoalkylenphosphonsäuregruppen aufweisenden Ionenaustauscherharzen der Formel

$$\text{Harz-CH}_2\text{-}\underset{\displaystyle H_{(x)}}{\underset{|}{N}}\text{-[CH}_2\text{-P(O)(OH)}_2]_{2-x}$$

in der x eine Zahl, die größer als 0 oder gleich oder kleiner als 2 ist,
vorgeschlagen, zum einen als Matrices makroporöse vernetzte vinylaromatische Perlpolymerisate mit bestimmten physikalischen Eigenschaften (bestimmter Dichte, bestimmter Korngröße, bestimmter Porösität u.s.w.) einzusetzen und diese speziellen Matrices nur begrenzt zu funktionalisieren, nämlich so, daß die Aufnahmefähigkeit der Ionenaustauscher für Kalzium 31 g = 1,55 val/l Harz nicht überschreitet. Diese Erhöhung der osmotischen Widerstandsfähigkeit auf Kosten der Kapazität der Harze stellt natürlich keine befriedigende Lösung des technischen Problems dar, quellungsstabile Aminoalkylenphosphonsäuregruppen aufweisende Ionenaustauscherharze zu schaffen, denn die Praxis verlangt nicht nur Quellungsstabilität sondern auch eine möglichst hohe Kapazität.

Überraschenderweise wurde nun gefunden, daß man Aminoalkylenphosphonsäuregruppen aufweisende Ionenaustauscherharze auf Basis vernetzter vinylaromatischer Perlpolymerisate erhält, die sowohl die gewünschte hohe Kapazität als auch die erforderliche hohe osmotische und mechanische Widerstandsfähigkeit aufweisen, wenn man für die Umsetzung der makroporösen aminomethylierten vernetzten vinylaromatischen Harze mit Formaldehyd und Phosphor-III-Verbindungen in Gegenwart von Mineralsäuren Schwefelsäure als Mineralsäure verwendet und diese in einer solchen Menge einsetzt, daß ihre Konzentration mindestens 20 Gew.-% beträgt, bezogen auf das Gesamtgewicht der flüssigen Phase des Reaktionsgemisches.

Gegenüber den bekannten, mit Salzsäure arbeitenden Verfahren, hat dieses Verfahren außer dem Vorteil, Harze mit verbesserten Eigenschaften zu liefern, den weiteren wichtigen Vorteil, daß bei ihm die Bildung des hochtoxischen Chlormethylethers mit Sicherheit vermieden wird.

Die Erfindung betrifft daher ein Verfahren zur Herstellung von Aminomethylenphosphonsäuregruppen aufweisenden Ionenaustauscherharzen durch Umsetzung von makroporösen aminomethylierten vernetzten vinylaromatischen Harzen mit Formaldehyd und Phosphor-III-Verbindungen in wäßrigen Mineralsäuren, das dadurch gekennzeichnet ist, daß man Schwefelsäure als Mineralsäure verwendet und diese in einer solchen Menge einsetzt, daß ihre Konzentration mindestens 20 Gew.-% beträgt, bezogen auf das Gewicht der flüssigen Phase des Reaktionsgemisches.

Als flüssige Phase des Reaktionsgemisches wird im Rahmen der erfindungsgemäßen Verfahrens die Gesamtmenge der Flüssigkeiten bezeichnet, die für das Suspendieren und Phosphonomethylieren der aminomethylierten Harze verwendet werden. Die flüssige Phase setzt sich zusammen, aus dem für das Suspendieren der aminomethylierten Harze verwendeten Wasser und den für die Phosphonomethylierung verwendeten flüssigen Reaktionskomponenten, phosphorige Säure, und/oder deren Mono- und/oder Dialkylestern, Schwefelsäure und wäßriger Formaldehyd-Lösung.

Das erfindungsgemäße Verfahren wird vorzugsweise wie folgt ausgeführt:

Das aminomethylierte makroporöse vernetzte vinylaromatische Harz (Perlpolymerisat) wird in dem Zustand, in dem es nach der Aminomethylierung anfällt, d.h. mit einem Wassergehalt von 30-60 Gew.-%, bezogen auf das Gesamtgewicht des Harzes, in so viel entsalztem Wasser suspendiert, daß eine gerade noch rührbare Suspension ent steht. Diese Suspension wird unter Rühren entweder zunächst mit der berechneten Menge Schwefelsäure und anschließend je Mol Aminomethylgruppe mit 1 bis 4 Mol Phosphor-III-Verbindung oder - vorzugsweise - zunächst mit der Phosphor-III-Verbindung und anschließend der berechneten Menge Schwefelsäure versetzt. Das auf diese Weise erhaltene Reaktionsgemisch wird anschließend auf Rückflußtemperatur erhitzt und bei dieser Temperatur langsam unter Rühren mit 3 bis 8 Mol Formaldehyd je Mol Aminomethylgruppe des Harzes, z.B. in Form 37 %iger wäßriger Formalin-Lösung versetzt. Nach beendeter Formaldehyd-Zugabe wird das Reaktionsprodukt noch etwa 3 bis 15 Stunden bei Rückflußtemperatur gerührt. Dann wird das Reaktionsgemisch abgekühlt, die flüssige Phase abgetrennt und das Harz mit entsalztem Wasser gewaschen.

Die als Ausgangsverbindungen für das erfindungsgemäße Verfahren benötigten aminomethylierten makroporösen vinylaromatischen Harze (Perlpolymerisate) sind bekannt (siehe Ullmanns Encyclopädie der technischen Chemie, 4. Auflage, Band 13, S. 301 bis 303) und z.B. nach den in den US-PSen 3 989 650, 3 882 053 und 4 077 918 beschriebenen Verfahren erhältlich.

Die erfindungsgemäß hergestellten Aminoalkylenphosphonsäuregruppen aufweisenden Ionenaustauscherharze werden in den nachfolgenden Beispielen durch folgende Eigenschaften charakterisiert:

1. die Totalkapazität für Natriumionen,
2. die osmotische Widerstandsfähigkeit (Quellungsstabilität)
3. die mechanische Beständigkeit.

Diese drei Eigenschaften werden nach folgenden Verfahren bestimmt:

1. Bestimmung der Totalkapazität für Natriumionen:

100 ml Harz werden im Filterrohr mit 3 %iger Salzsäure regeneriert. Anschließend wird das Harz mit entsalztem Wasser neutral und chloridfrei gewaschen. 50 ml des regenerierten Harzes werden nun mit 0,1 n Natronlauge im Durchlauf beladen. Den Ablauf fängt man jeweils in einem 250 ml Meßkolben auf und titriert die gesamte Menge mit 1 n Salzsäure. Es wird solange Natronlauge aufgegeben, bis 250 ml Ablauf zur Neutralisation 24,5 bis 25 ml 1 n Salzsäure erfordern. Aus dem Harzvolumen, den Mengen an aufgegebener Natronlauge und verbrauchter Salzsäure wird die Totalkapazität des Harzes für Natriumionen berechnet.

2. Bestimmung der osmotischen Widerstandsfähigkeit (Quellungsstabilität):

50 ml Harz werden in einem Glasrohr 30 mal einem je 1 Stunde dauernden Beladungszyklus ausgesetzt. Der Beladungszyklus besteht aus folgenden Teilschritten: Beladen mit 0,5 n Salzsäure, Spülen mit entsalztem Wasser, Beladen mit 0,5 n Natronlauge, Spülen mit entsalztem Wasser. Anschließend wird unter dem Mikroskop die Anzahl der unversehrt gebliebenen Perlen ausgezählt.

3. Bestimmung der mechanischen Stabilität (Walzentest):

Das zu prüfende Harz wird in gleichmäßiger Schichtdicke zwischen zwei Kunststofftüchern verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Vor und nach dem Walzen wird an repräsentativen Mustern durch Auszählen unter dem Mikroskop die Zahl der unversehrten Perlen ermittelt.

## Beispiel

500 ml (0,88 val) makroporöses aminomethyliertes Styrol-Divinylbenzol-Perlpolymerisat (Wassergehalt: 45 Gew.-%; Säurebindungsvermögen: 1,77 val/l; erhalten durch Aminomethylieren eines mit 8 Gew.-% Divinylbenzol vernetzten und mit 59 Gew.-% Isododecan makroporös gemachten Polystyrol-Perlpolymerisates) werden bei Raumtemperatur in

a) 130 ml
b) 160 ml
c) 250 ml
d) 500 ml
e) 750 ml

entsalztes Wasser eingetragen. Die Suspension wird unter Rühren innerhalb von 10 Minuten mit 234 g (1,95 Mol) eines Gemisches aus 25 Gew.-% phosphoriger Säure, 50 Gew.-% Monomethylphosphit und 25 Gew.-% Dimethylphosphit (P-III-Gehalt des Gemisches: 25,75 Gew.-%) versetzt. Anschließend werden innerhalb von

1 Stunde bei 30 bis 35°C 354 g 98 Gew.-%ige Schwefelsäure zugetropft. Das Reaktionsgemisch wird unter Rühren auf Rückflußtemperatur (etwa 90° C) erhitzt und innerhalb 1 Stunde bei dieser Temperatur mit 323 g (= 4 Mol) Formalinlösung (37 Gew.-%ig) versetzt. Das Reaktionsgemisch wird anschließend 15 Stunden bei Rückflußtemperatur gerührt. Dann wird das Reaktionsgemisch abgekühlt und das Harz abgetrennt und mit entsalztem Wasser gewaschen.

In der nachstehenden Tabelle sind die Ausbeuten an phosphonomethylierten Harzen ($H^+$-Form), die mit den verschiedenen Schwefelsäurekonzentrationen erhalten wurden, die Totalkapazität der erhaltenen Harze (in der $Na^+$-Form) und deren Stabilitäts-Eigenschaften zusammengestellt.

Die bei der Phosphonomethylierung erhaltenen Harze in der $H^+$-Form wurden durch Behandeln mit 4 Gew.-%iger wäßriger Natronlauge in einer Säule in die $Na^+$-Form überführt.

**Tabelle 1**

| Beispiel | $H_2SO_4$-Konzentration [Gew.-%]* | Ausbeute [ml] | Totalkapazität für $Na^+$ [val/l Harz] | Totalkapazität für $Na^+$ [val/kg Harz] | Osmotische Widerstandsfähigkeit [% ganze Perlen] | Mechanische Stabilität [% ganze Perlen] |
|---|---|---|---|---|---|---|
| a | 33,32 | 745 | 2,98 | 6,45 | 95 | 98 |
| b | 32,38 | 735 | 2,87 | 6,25 | 95 | 98 |
| c | 29,87 | 725 | 2,89 | 6,18 | 98 | 98 |
| d | 24,58 | 720 | 2,68 | 5,82 | 98 | 98 |
| e | 20,88 | 720 | 2,62 | 5,82 | 98 | 98 |

* bezogen auf die flüssige Phase

## Patentansprüche

1. Verfahren zur Herstellung von Aminomethylenphosphonsäuregruppen aufweisenden Ionenaustauscherharzen durch Umsetzung von makroporösen aminomethylierten vernetzten vinylaromatischen Harzen mit Formaldehyd und Phosphor-III-Verbindungen in wäßrigen Mineralsäuren, dadurch gekennzeichnet, daß man als Mineralsäure Schwefelsäure verwendet und diese in einer solchen Menge einsetzt, daß ihre Konzentration mindestens 20 Gew.-% beträgt, bezogen auf das Gewicht der flüssigen Phase des Reaktionsgemisches.

2. Verfahren gemäß Anspruch 1, dadurch gekennzeichnet, daß die Konzentration 21 bis 35 Gew.-% beträgt.

## Claims

1. Process for the preparation of ion exchange resins containing aminomethylenephosphonic acid groups by reacting macroporous, aminomethylated, crosslinked, vinyl-aromatic resins with formaldehyde and phosphorus(III) compounds in aqueous mineral acids, characterised in that sulphuric acid is used as the mineral acid and is employed in such an amount that its concentration is at least 20 % by weight, relative to the weight of the liquid phase of the reaction mixture.

2. Process according to Claim 1, characterised in that the concentration is 21 to 35 % by weight.

## Revendications

1. Procédé de préparation de résines échangeuses d'ions contenant des groupes acide aminométhylènephosphonique par réaction de résines vinylaromatiques réticulées, aminométhylées, macroporeuses, avec le formaldéhyde et des composés du phosphore trivalent dans des acides minéraux aqueux, caractérisé en ce que l'on utilise en tant qu'acide minéral l'acide sulfurique en quantité telle que sa concentration représente au moins 20 % du poids de la phase liquide du mélange de réaction.

2. Procédé selon la revendication 1, caractérisé en ce que la concentration est de 21 à 35 % en poids.